# EUROPEAN PATENT APPLICATION

(11) **EP 4 667 421 A1**
(43) Date of publication of application: **24.12.2025**
(21) Application number: 24183249.2
(22) Date of filing: 20.06.2024
(51) Int. Cl.: C02F 1/24, B03D 1/14, C02F 1/52, C02F 1/56, C02F 1/66

(54) **CHEMICAL WATER TREATMENT METHOD AND AN APPARATUS USED IN THE METHOD**

(71) Applicant: Owatec Group Oy, 91910 Tupos (FI)
(72) Inventor: PELLINEN, Jaakko, 90230 Oulu (FI)
(74) Representative: Berggren Oy

(57) **Abstract**

The method of treating water comprising steps of feeding influent water into a flotation tank via a pipe reactor, adding chemicals into the water, injecting micro- and/or nanobubbles into the water and removing treated water from the flotation tank. At least part of the chemicals and the micro- and/or nanobubbles are injected to the influent water flowing in the pipe reactor substantially simultaneously before the influent water enters to the flotation tank.

## Description

### Technical Field

The invention relates to a method of treating water comprising steps of feeding influent water into a flotation tank via a pipe reactor, adding chemicals into the water, injecting micro- and/or nanobubbles into the water and removing treated water from the flotation tank. The invention further relates to an apparatus used in the method.

### Background Art

Water treatment typically consists of multiple steps that work together to purify water. One of these steps is chemical treatment where chemicals are added to precipitate and separate the impurities contained in the water through coagulation and flocculation. The chemicals used in coagulation and flocculation typically include a coagulant, a flocculant, and a pH adjustment chemical. Depending on the treated water one on more of these chemicals are added into the water to be treated.

A common problem faced in the chemical water purification method relates to mixing of the chemicals into the water to be treated. Typically, coagulants are mixed with the water first and after the flocculation is started flocculants are added to increase the floc size of the particles. Some commonly used inorganic coagulants, such as iron and aluminum, have an optimum pH where they interact well with the particles in treated water. Thus, the pH of the treated water might need adjusting prior to the coagulant and flocculant injections. To enhance the mixing of the chemicals into the water static mixer are often used in the reactor tank. Incomplete mixing of the chemicals into the water increases the need of chemicals and prolongs the treatment process of the water.

Document KR100989213 B1 discloses a water treatment method and device using nano-sized microbubbles for enhancing purification. The device comprises a flotation tank, a pressurization pump, an injector connected to the pressurization pump, an air compressor, a chemical injection pump and a nanobubble generator. The flotation tank has a water inlet for the influent water and an outlet, through which the treated water is discharged from the device. The pressurization pump is connected to the bottom of the tank for circulating the treated water via nanobubble generator back to the tank. The air compressor and the chemical injection pump are connected to the injector to supply air and chemicals into to circulating water.

An object of the invention is to provide a chemical water treatment method and an apparatus used in the method, with which drawbacks relating to the prior art can be diminished.

The object of the invention is achieved with the method and apparatus, which are characterized in what is disclosed in the independent patent claims. Some preferred embodiments of the invention are disclosed in the dependent claims.

### Summary of the invention

The invention is related to a method of treating water, in particular industrial or domestic wastewater, comprising steps of feeding influent water into a flotation tank via a pipe reactor, adding chemicals into the water, injecting micro- and/or nanobubbles into the water and removing treated water from the flotation tank. At least part of the chem icals and the micro- and/or nanobubbles are injected to the influent water flowing in the pipe reactor substantially simultaneously before the influent water enters to the flotation tank.

In some embodiments of the method according to the invention said chemicals injected to the influent water comprise coagulants, such as polyaluminium chloride, iron sulphate or biopolymers and the coagulants and the micro- and/or nanobubbles are injected to the influent water flowing in the pipe reactor substantially simultaneously.

In some embodiments of the method according to the invention said chemicals injected to the influent water comprise flocculants, such as such as polyamine, polyamide, polyacrylamide or biopolymers. Biopolymers can be anionic, cationic or nonionic. The flocculants are injected to the influent water flowing in the pipe reactor after the injection of the coagulants and the micro- and/or nanobubbles.

In some embodiments of the method according to the invention said chemicals injected to the influent water comprise pH adjustment chemical, such as NaOH, Mg(OH)2 or Ca(OH)2 and the pH adjustment chemicals are injected to the influent water flowing in the pipe reactor before the injection of the coagulants and the micro- and/or nanobubbles.

In some embodiments of the method according to the invention said chemicals and micro- and/or nanobubbles are injected to the influent water with a 4-8 bar pressure.

In some embodiments of the method according to the invention the injected micro- and or nanobubbles contain air, oxygen, nitrogen or methane.

Some embodiments of the method according to the invention further comprise a step of injecting micro- and/or nanobubbles into the water inside the flotation tank.

Some embodiments of the method according to the invention further comprise a step of monitoring the turbidity on the water inside the flotation tank and adjusting the dosage on the chemicals injected to the influent water based on the monitored turbidity. Turbidity of the water is typically a reliable visible indicator demonstrating the workability of the chemical purification. If the turbidity of the water is high, coagulation and flocculation is not sufficient, whereby the amount of chemicals injected into the influent water is increased. When the turbidity of the water is low enough, the system is working well, and the chemical dosage does not need any adjustments.

Some embodiments of the method according to the invention further comprises a step of monitoring the pH of the water entering the flotation tank and adjusting the dosage on the pH adjustment chemical based on the monitored pH. Inorganic coagulants, such as iron and aluminum, have an optimum pH where they interact well with the particles in treated water. Thus, the pH of the water inside the flotation tank might need adjusting to optimize the effect of coagulants and flocculants.

In some embodiments of the method according to the invention the water treated in the method contains industrial or domestic wastewater.

The apparatus according to the invention for treating water, especially industrial or domestic wastewater, comprises a flotation tank, a pipe reactor for feeding water into the flotation tank, a first chemical injector for injecting chemical, including at least coagulant, into the water to be treated and a first multiphase pump for pumping water and for generating micro- and/or nanobubbles into the water to be treated. The second chemical injector is arranged in connection to the first multiphase pump and configured to inject chemical into the water substantially simultaneously with the generation of the micro- and/or nanobubbles.

In some embodiments of the apparatus according to the invention the first multiphase pump is connected to a fresh source or purified water source via an inlet pipe and to the pipe reactor via an outlet pipe and the second chemical injector is arranged to the outlet pipe next to the first multiphase pump.

In some embodiments of the apparatus according to the invention the outlet pipe has pressure valve configured to maintaining the pressure generated by the first multiphase pump inside the outlet pipe and to release pressurised water from the outlet pipe to the pipe reactor.

Some embodiments of the apparatus according to the invention further comprise a first chemical injector connected to the pipe reactor upstream of the outlet pipe and configured to inject flocculant into the water flowing inside the pipe reactor.

Some embodiments of the apparatus according to the invention further comprise a third chemical injector connected to the pipe reactor downstream of the outlet pipe and configured to inject pH adjustment chemical into the water flowing inside the pipe reactor.

Some embodiments of the apparatus according to the invention further comprise a circulation pipe having a first end connected to the first position of the flotation tank and a second end connected to the second position of the flotation tank and a second multiphase pump between the first and second ends of the circulation pipe, which second multiphase pump is configured to pump water via the circulation pipe and to generate micro- and/or nanobubbles into the pumped water.

Some embodiments of the apparatus according to the invention further comprise a turbidity measuring device for monitoring the turbidity of the water inside the flotation tank and said second chemical injector is configured to adjust the dosage on the coagulants to be injected to the influent water based on the monitored turbidity.

Some embodiments of the apparatus according to the invention further comprise a pH measuring device for monitoring the pH of the water entering the flotation tank and said fist chemical injector is configured to adjust the dosage of the pH adjustment chemicals to be injected to the influent water based on the monitored pH.

An advantage of the invention is, that the amount of chemicals used in the water treatment method can be reduced without compromising the purification efficiency. Even better purification results can be achieved with lower amount of chemicals. In some cases the consumption of coagulant can be reduced by 5-30 %.

A further advantage of the invention is, that high pressure injection of micro- and nanobubbles simultaneously with chemical injection enhances the mixing the of the chemicals into the water, whereby no static mixers are needed.

### Brief Description of the Drawings

In the following the invention will be described in detail, by way of examples, with reference to the accompanying drawings in which,
- Fig. 1: depicts an example of the apparatus used in the method as a schematic side elevation,
- Fig. 2: depicts a multiphase pump belonging to the apparatus as a partial cross-section and
- Fig. 3: depicts the method according to the invention as a flow chart.

### Detailed Description

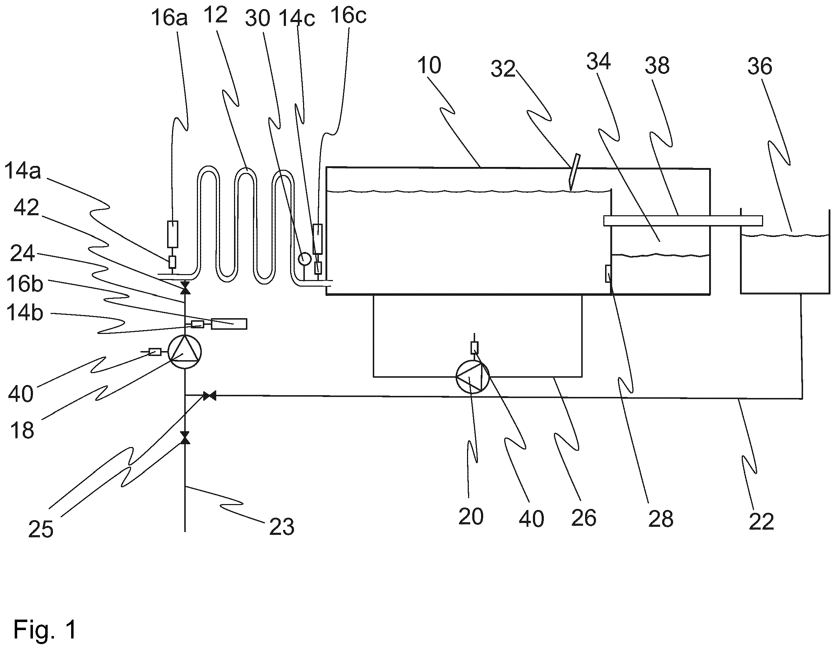

Fig. 1 depicts an example of the apparatus according to the invention as a schematic side -elevation. The apparatus for treating water comprises a flotation tank 10 and a meandering pipe reactor 12 for feeding influent water into the flotation tank. Above the flotation tank there is a movable scraper 32 for collecting and removing sludge, i.e. the precipitated layer of impurities floating on the surface of the water, to a sludge basin 34 locating at the second end of the flotation tank. A treated water basin 36 is locating next to the sludge basin and connected to the second end of the flotation tank via an outflow pipe 38 for leading treated water from the flotation tank to the treated water basin. The water treated in the apparatus is preferably effluent or sewage, especially industrial or domestic wastewater.

The apparatus further comprises three chemical storages, a first chemical storage 16a for storing pH adjusting chemical, a second chemical storage 16b for storing coagulant and a third chemical storage 16c for storing flocculant, and three chemical injectors, a first chemical injector 14a, a second chemical injector 14b and a third chemical injector 14c for injecting chemicals from the respective chemical storages into the influent water flowing inside the pipe reactor. The first chemical injector 14a is connected to pipe reactor near the upstream end of the pipe reactor for injecting pH adjusting chemicals from the first chemical storage 16a into the influent water.

A first multiphase pump 18 is connected the pipe reactor 12 via an outlet pipe 24 near the upstream end of the pipe reactor but downstream of the first chemical injector. The second chemical injector 14b is connected to the outlet pipe close to the first multiphase pump for injecting coagulant from the second chemical storage 16b into the water pumped by the first multiphase pump. The first multiphase pump comprises a gas injector 40 for feeding gas, such as air, oxygen, nitrogen or methane, into the water to generate micro- and/or nanobubbles into the pumped water. At the second end of the outlet pipe 24 there is a pressure valve 42 for maintaining the pressure generated by the first multiphase pump inside the outlet pipe 24 and for releasing pressurised, micro- and/or nanobubbles and coagulant containing water into the pipe reactor 12. The suction side of the first multiphase pipe is connected to the treated water basin 36 via an inlet pipe 22 for feeding treated, i.e. purified water to the first multiphase pump. The inlet pipe has a branch pipe 23, which can be connected to the fresh water source, such as a water supply network. The branch pipe and the inlet pipe are provided with valves 25 for selectively directing water to first multiphase pump from the treated water basin and/or from the fresh water source. The third chemical injector 14c is connected to the pipe reactor 12 for injecting flocculant to the water from the third chemical storage 16c. The third chemical injector is placed near the outflow end of the pipe reactor just before the pipe reactor connects to the flotation tank 10. Thus, the apparatus is configured to inject the chemicals and micro- and/or nanobubbles to the influent water already in the pipe reactor, i.e. before the influent water enters to the flotation tank.

Upstream of third chemical injector 14c there is a pH measuring device 30 for monitoring the pH of the water flowing inside the pipe reactor before the water enters the flotation tank 10. The pH measuring device is connected to the first chemical injector 14a via data transmission means and the first chemical injector is configured to adjust the dosages on the pH adjusting chemicals injected to the influent water based on the measured pH.

The apparatus further comprises a circulation pipe 26 having a first end connected to the first position of the flotation tank 10 and a second end connected to the second position of the flotation tank. A second multiphase pump 20, which is structurally substantially similar to the first multiphase pump, is placed between the first and second ends of the circulation pipe 26, which second multiphase pump 20 is configured to pump water via the circulation pipe 26, i.e. to circulate water inside the flotation tank via circulation pipe and to generate micro- and/or nanobubbles into the circulated water.

Inside the flotation tank 10 of the apparatus there is a turbidity measuring device 28 for monitoring the turbidity of the water. The turbidity measuring device is connected to the second chemical injector 14b via data transmission means and the second chemical injector 14b is configured to adjust the dosages of the coagulant injected to the influent water based on the monitored turbidity.

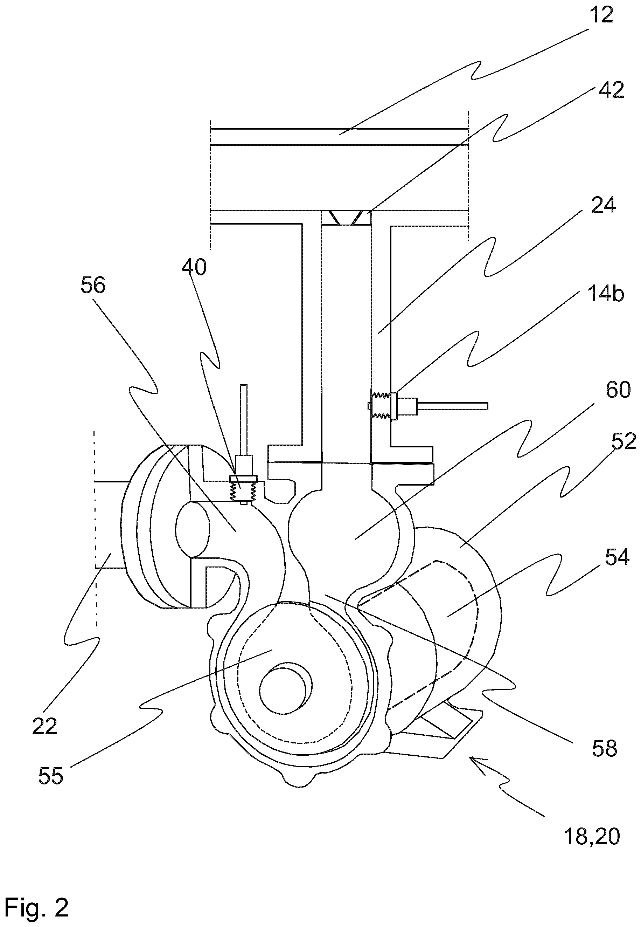

In figure 2 the first and second multiphase pumps 18, 20 belonging to the apparatus shown in fig. 1 is depicted as a partial cross-section. The first and second multiphase pumps are structurally similar, whereby figure 2 and the following explanation applies both to the first multiphase pump and to the second multiphase pump. However, the pumping capacity of the first and second pumps may be unequal. In the following explanation term "pump" refers both to the first and to the second pump.

The pump comprises a casing 52, an impeller 55 and a motor 54 for rotating the impeller. The casing encloses a chamber comprising an inflow channel 56 and an outflow channel 58. The impeller is locating inside said chamber between the inflow and outflow channels. The impeller is a disk-like part having grooves or indentation (not shown) on the outer circumference of the impeller for moving water from the inflow channel to the outflow channel. In the inflow channel 56 of the pump there is a gas injector 40, for injecting gas into the water flowing through the inflow channel to create a gas- water mixture. Preferable the injected gas is air, but it can contain also oxygen, nitrogen or methane.

The outflow channel is connected to the outlet pipe 24 via connecting flanges. The outflow channel contains an enlargement creating a pressure chamber 60 between the impeller and the connecting flanges. The second chemical injector 14b is connected to the outlet pipe for injecting coagulant to the water inside the outlet pipe. The second end of the outlet pipe, i.e. the end of the outlet pipe connecting to the pipe reactor 12, is provided with a pressure valve 42. The purpose of the pressure valve 42 is to raise the pressure of the gas- water- coagulant mixture inside the outlet pipe and to maintain this elevated pressure when the pump is in operation. The pressurised mixture of gas, water and coagulant is released out of the outlet pipe through the pressure valve 42, whereby sudden pressure loss in the water creates micro- and/or nanobubbles into the water. Simultaneously with the micro- and/or nanobubbles coagulant injected into the outlet pipe are released into the reactor pipe. Preferably the pressure inside the pressure chamber is 4 to 8 bar, when the pumps are in operation. The micro- and/or nanobubbles injected into the water stream with simultaneous injection of the coagulant, enhance the mixing of the coagulant into the water to be treated whereby no additional mixing is needed. The enhanced mixing of the coagulant and the water improves and hastens the precipitation of impurities and solids and the separation of the formed sludge in the following flotation unit.

The sufficient water pumping capacity and air injection capacity of the pump depends on the amount of the water to be treated and the nature of the water. For example, a pump having a water pumping capacity of 5 m³/h and gas injection capacity of 5-6 litre/min can be used in small scale apparatuses and a pump having a water pumping capacity of 15 m³/h and gas injection capacity of 15-20 litre/min can be used in large scale apparatuses.

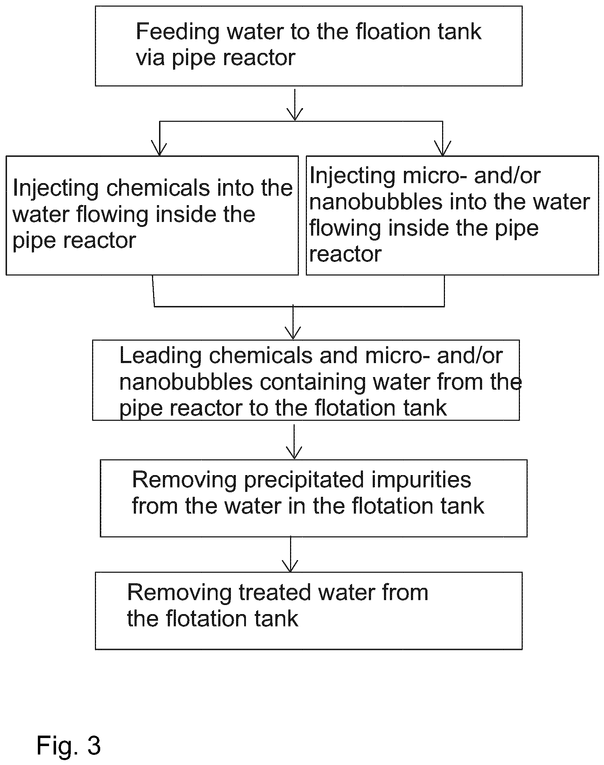

In figure 3 the method according to the invention of treating water, in particular industrial or domestic wastewater, is depicted as a flow chart. In the method the apparatus shown in fig. 1 is used.

The method comprises steps of feeding water into a flotation tank 10 via a pipe reactor 12. While the influent water is flowing inside pipe reactor, i.e before the influent waters enters into flotation tank, chemicals used in the treatment method and micro- and/or nanobubbles are injected into the influent water. The gas inside the bubbles can be oxygen, nitrogen, methane or preferably air. The chemicals used in the methods comprise at least coagulant, and preferably also flocculants and pH adjustment chemical. The chemicals can be any chemicals suitable for using in water treatment processes. For example, the coagulants can be polyaluminium chloride, iron sulphate or biobased chemicals, flocculant can be polyamine, polyamide, polyacrylamide or biopolymers and the pH adjustment chemical can be NaOH, Mg(OH)2 or Ca(OH)2.

Ph adjustment chemicals are injected into the pipe reactor through first chemical injector 14a at the first end of the pipe reactor. Coagulants are injected into the pipe reactor under high pressure created by the first multiphase pump 18 simultaneously with the micro- and/or nanobubbles, which ensures a high mixing rate of the chemicals and the water. Bubbles and coagulant are mixed in the outlet pipe, from which the mixture is released into the pipe reactor. Thus, the coagulants and micro- and/or nanobubbles are injected to the water flowing in the pipe reactor substantially simultaneously. The multiphase pump creates 4-8 bar pressure for the mixture for the coagulants and micro- and/or nanobubbles, which ensures a high mixing rate of the chemicals and the water. Flocculants are injected into the water flowing inside pipe reactor just before the pipe reactor connects to the flotation tank.

From the reactor pipe the water, which now contains the chemicals and the micro- and/or nanobubbles flow into the flotation tank where the flotation occurs. The micro- and/or nanobubbles attach to the solid particles contained in the water and enhance the flotation in the flotation tank, because the particles are already induced with bubbles before entering the flotation tank. The micro- and nanobubbles also enhance the reactions between the chemicals and the impurities contained in the water.

In the flotation tank, part of the water is circulated via circulation pipe 26 and via second multiphase pump 20 back to the flotation tank. The second multiphase pump creates more micro- and/or nanobubbles into the circulated water. Thus, the second multiphase pump increases the amount of micro- and/ or nanobubbles in the water inside the flotation tank. The bubbles attach to the precipitated particles and help them rise to the surface of the water. The precipitate layer of impurities is removed from the surface with a scraper 32 and collected into a sludge basin 34 and the treated water is collected into the treated water basin 36 through outflow pipe 38.

In the method the pH and turbidity of the water measured and monitored preferably continuously. Turbidity of the water is typically a reliable visible indicator demonstrating how well the chemical purification process is working. If the turbidity of the water is high, coagulation and flocculation is not sufficient, whereby the amount of coagulants injected into the influent water is increased. When the turbidity of the water is low enough, the system is working well, and the coagulant dosage does not need any adjustments.

Inorganic coagulants, such as iron and aluminum, have an optimum pH where they interact well with the particles in treated water. Thus, the pH of the water inside the flotation tank might need adjusting to optimize the effect of coagulants and flocculants. By continuously monitoring and measuring the pH of the water entering to the flotation tank and adjusting the dosage on the pH adjustment chemical based on the measured pH, the amount of the coagulants can be reduced.

Some preferred embodiments of the method and apparatus has been disclosed above. The invention is not limited to the solutions explained above, but the invention can be applied in different ways within the limits set by the patent claims.

### Reference Signs:

| | | | |
|---|---|---|---|
| 10 | flotation tank | 32 | scraper |
| 12 | pipe reactor | 34 | sludge basin |
| 14a | first chemical injector | 36 | treated water basing |
| 14b | second chemical injector | 38 | outflow pipe |
| 14c | third chemical injector | 40 | gas injector |
| 16a | first chemical storage | 42 | pressure valve |
| 16b | second chemical storage | 52 | casing |
| 16c | third chemical storage | 55 | impeller |
| 18 | first multiphase pump | 54 | motor |
| 20 | second multiphase pump | 56 | inflow channel |
| 22 | inlet pipe | 58 | outflow channel |
| 23 | branch pipe | 60 | pressure chamber |
| 24 | outlet pipe | | |
| 25 | valve | | |
| 26 | circulation pipe | | |
| 28 | turbidity measuring device | | |
| 30 | pH measuring device | | |

## Claims

1. A method of treating water, in particular industrial or domestic wastewater, comprising steps of feeding influent water into a flotation tank (10) via a pipe reactor (12), adding chemicals into the water, injecting micro- and/or nanobubbles into the water and removing treated water from the flotation tank (10), **characterized in that** at least part of said chemicals and micro- and/or nanobubbles are injected to the influent water flowing in the pipe reactor (12) substantially simultaneously before the influent water enters to the flotation tank (10).

2. The method according to claim 1, **characterised in that** said chemicals injected to the influent water comprise coagulants, such as polyaluminium chloride, iron sulphate or biopolymers, and the coagulants and the micro- and/or nanobubbles are injected to the influent water flowing in the pipe reactor (12) substantially simultaneously.

3. The method according to claim 1 to 2, **characterised in that** said chemicals injected to the influent water comprise flocculants, such as polyamine, polyamide, polyacrylamide or biopolymers, and the flocculants are injected to the influent water flowing in the pipe reactor (12) after the injection of the coagulants and the micro- and/or nanobubbles.

4. The method according to any of the claims 1 to 3, **characterised in that** said chemicals injected to the influent water comprise pH adjustment chemical, such as NaOH, Mg(OH)2 or Ca(OH)2, and the pH adjustment chemical are injected to the influent water flowing in the pipe reactor (12) before the injection of the coagulants and the micro- and/or nanobubbles.

5. The method according to any of the claims 1 to 4, **characterised in that** said chemicals and micro- and/or nanobubbles are injected to the influent water with a 4-8 bar pressure.

6. The method according to any of the claims 1 to 5, **characterised in that**, the injected micro- and/or nanobubbles contain air, oxygen, nitrogen or methane.

7. The method according to any of the claims 1 to 6, **characterised in that**, the method further comprises a step of injecting micro- and/or nanobubbles into the water inside the flotation tank (10).

8. The method according to any of the claims 1 to 7, **characterised in that**, the method further comprises a step of monitoring the turbidity on the water inside the flotation tank (10) and adjusting the dosage on the chemicals injected to the influent water based on the monitored turbidity.

9. The method according to any of the claims 4 to 8, **characterised in that**, the method further comprises a step of monitoring the pH of the water entering the flotation tank and adjusting the dosage on the pH adjustment chemical based on the monitored pH.

10. An apparatus for treating water, especially industrial or domestic wastewater, comprising a flotation tank (10), a pipe reactor (12) for feeding water into the flotation tank (10), a second chemical injector (14b) for injecting chemical, including at least coagulant, into the water to be treated and a first multiphase pump (18) for pumping water and for generating micro- and/or nanobubbles into the water to be treated, **characterized in that** the second chemical injector (14b) is arranged in connection to the first multiphase pump (10) and configured to inject chemical into the water substantially simultaneously with the generation of the micro- and/or nanobubbles.

11. The apparatus according to claim 10, **characterized in that** the first multiphase pump (18) is connected to a fresh or purified water source via an inlet pipe (22) and to the pipe reactor (22) via an outlet pipe (24) and the second chemical injector (14b) is arranged to the outlet pipe (24) next to the first multiphase pump (18).

12. The apparatus according to claim 11, **characterized in that** the outlet pipe (24) has pressure valve (42) configured to maintaining the pressure generated by the first multiphase pump (18) inside the outlet pipe (24) and to release pressurised water from the outlet pipe (24) to the pipe reactor (12).

13. The apparatus according to claim 11 or 12, **characterized in that** it further comprises a first chemical injector (14a) connected to the pipe reactor (12) upstream of the outlet pipe (24) and configured to inject pH adjustment chemical into the water flowing inside the pipe reactor (12).

14. The apparatus according to any of the claims 11 to 13, **characterized in that** it further comprises a third chemical injector (14c) connected to the pipe reactor (12) downstream of the outlet pipe (24) and configured to inject flocculant into the water flowing inside the pipe reactor (12).

15. The apparatus according to any of the claims 10 to 14, **characterized in that** the apparatus further comprises a circulation pipe (26) having a first end connected to the first position of the flotation tank (10) and a second end connected to the second position of the flotation tank (10) and a second multiphase pump (20) between the first and second ends of the circulation pipe (26), which second multiphase pump (20) is configured to pump water via the circulation pipe (26) and to generate micro- and/or nanobubbles into the pumped water.

16. The apparatus according to any of the claims 10 to 15, **characterized in that** the apparatus further comprises a turbidity measuring device (28) for monitoring the turbidity of the water inside the flotation tank (10) and said second chemical injector (14b) is configured to adjust the dosage on the coagulants to be injected to the influent water based on the monitored turbidity.

17. The apparatus according to any of the claims 10 to 16, **characterized in that** the apparatus further comprises a pH measuring device (30) for monitoring the pH of the water entering the flotation tank (10) and said first chemical injector (14a) is configured to adjust the dosage on the pH adjustment chemicals to be injected to the influent water based on the monitored pH.
